# EUROPÄISCHE PATENTSCHRIFT

(11) **EP 3 926 158 B1**
(45) Veröffentlichungstag und Bekanntmachung des Hinweises auf die Patenterteilung: **31.07.2024**
(21) Anmeldenummer: 21178848.4
(22) Anmeldetag: 10.06.2021
(51) Int. Cl.: F02F 3/00, B22F 5/00

(54) **VERFAHREN ZUR HERSTELLUNG EINES KOLBENS**
METHOD FOR PRODUCING A PISTON
PROCÉDÉ DE FABRICATION D'UN PISTON

(30) Priorität: 17.06.2020 DE 102020207512
(43) Veröffentlichungstag der Anmeldung: 22.12.2021
(73) Patentinhaber: MAHLE International GmbH, 70376 Stuttgart (DE)
(72) Erfinder: MANGOLD, Sebastian, 70374 Stuttgart (DE); SCHMIEDER, Benjamin, 70569 Stuttgart (DE)
(74) Vertreter: BRP Renaud & Partner mbB Rechtsanwälte Patentanwälte Steuerberater

(56) Entgegenhaltungen:
- WO-A1-2017/150321
- US-A1- 2019 218 996

## Beschreibung

Die vorliegende Erfindung betrifft ein Verfahren zur Herstellung eines Kolbens in einem Verbrennungsmotor aus einem Kolbenoberteil und einem Kolbenunterteil gemäß dem Oberbegriff des Anspruchs 1. Die Erfindung betrifft außerdem einen nach diesem Verfahren hergestellten Kolben.

Aus der WO 2014/165734 A1 ist ein gattungsgemäßes Verfahren zur Herstellung eines Kolbens bekannt, bei welchem ein einen Kolbenschaft und Bolzennaben aufweisendes Kolbenunterteil gegossen oder geschmiedet und anschließend darauf aufbauend das Kolbenoberteil mittels additivem Härtverfahren hergestellt wird.

Aus der US 2019/218996 A1 ist ein Verfahren zur Herstellung eines Kolbens für einen Verbrennungsmotor aus einem Kolbenoberteil und einem Kolbenunterteil bekannt. Zunächst wird dabei das Kolbenoberteil mit einem Kolbenboden und einem Teil eines Kühlkanals hergestellt, wobei das Kolbenunterteil mittels additivem Fertigungsverfahren hergestellt wird.

Aus der WO 2017/150321 A1 ist ein Kolben mit einem Kühlkanal bekannt, der eine nicht-rotationssymmetrische Form bezogen auf eine Kolbenhochachse aufweist.

Aus der WO 2015/134424 A1 ist ein Verfahren zur Herstellung eines Kolbens bekannt, bei welchem ein Kolbengrundkörper mit Ringpartie, Kolbenschaft und einem zum Kolbenboden hin offenen Kühlkanal gegossen oder geschmiedet wird. In einem nachfolgenden Verfahrensschritt wird der zunächst zum Kolbenboden hin offene Kühlkanal mittels additivem Verfahren geschlossen.

Aus der WO 2018/063863 A1 ist wiederum ein Verfahren zur Herstellung eines Kolbens bekannt, bei welchem eine zunächst offene Kühlkanalnut mittels additivem Verfahren geschlossen wird.

Nachteilig bei den bekannten Kolben ist jedoch, dass insbesondere die im späteren Betrieb thermisch und mechanisch hochbelasteten Bereiche des Kolbens mittels additivem Verfahren hergestellt sind, was langfristig aufgrund der beim additiven Verfahren erreichbaren geringeren Festigkeit zu Problemen führen kann. Um diese Nachteile auszugleichen, wird der Kolben im additiv hergestellten Teil oftmals stärker ausgebildet, was jedoch eine Zunahme des Gewichts und damit im späteren Betrieb auch eine Zunahme eines Kraftstoffverbrauchs bedingt.

Die vorliegende Erfindung beschäftigt sich daher mit dem Problem, für ein Verfahren zur Herstellung eines Kolbens eine verbesserte oder zumindest eine alternative Ausführungsform anzugeben, die insbesondere die aus dem Stand der Technik bekannten Nachteile nicht mehr aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

- Die vorliegende Erfindung beruht auf dem allgemeinen Gedanken, einen Kolben im Wesentlichen aus einem gegossenen Kolbenoberteil und einem additiv mittels Laserschmelzen hergestellten Kolbenunterteil herzustellen. Der Vorteil dieser Vorgehensweise ist, dass bei einem additiven Aufbauen eine vergleichsweise freie Formgestaltung möglich ist, die mit konventionellen Herstellungsmethoden, beispielsweise einem Gießen oder einem Schmieden, nicht oder nur sehr schwer realisierbar sind. Zudem bietet ein derartiges Verfahren den großen Vorteil, dass die bei einem Kolben sowohl thermisch als auch mechanisch hoch belasteten Bereiche, nämlich das Kolbenoberteil, konventionell hergestellt, insbesondere gegossen oder geschmiedet, sind, während die weniger stark belasteten Bereiche in einem Kolbenunterteil mittels additivem Verfahren hergestellt werden. Das erfindungsgemäße Verfahren weist dabei folgende Verfahrensschritte auf: Zunächst wird das Kolbenoberteil, welches einen Kolbenboden, zumindest Teile einer Ringpartie und zumindest einen Teil eines Kühlkanals aufweist, aus einer Aluminiumlegierung gegossen, beispielsweise als Scheibe gegossen, wobei ein Ringträger eingegossen und dadurch fest im Material des Kolbenoberteils eingebettet wird. Der Ringträger wird zuvor in einer Aluminiumschmelze, insbesondere in einer Aluminium-Silizium-Schmelze, alfiniert. Anschließend erfolgt ein Herstellen des Kolbenunterteils sowie ein Verschließen des im Kolbenoberteil angeordneten Teils des Kühlkanals mittels additivem Verfahren, konkret mittels Laserschmelzen, bei welchem das Aluminium in Pulverform in einer dünnen Schicht auf dem Kolbenoberteil aufgebracht und mittels Laserstrahlung lokal vollständig umgeschmolzen wird. Zum Schluss erfolgt noch ein Fertigbearbeiten des Kolbens mit Herstellen wenigstens einer Ringnut, insbesondere in dem Ringträger, zur späteren Aufnahme eines Kolbenrings, wobei ein derartiges Fertigbearbeiten beispielsweise mittels Drehen, Fräsen, Schleifen und/oder Läppen erfolgen kann. Mit dem erfindungsgemäßen Verfahren ist es erstmals möglich, thermisch und mechanisch hochbelastete Bereiche eines Kolbens konventionell mittels Gießen herzustellen, während thermisch und mechanisch weniger stark belastete Bereiche, hier des Kolbenunterteils, mittels additivem Verfahren, nämlich Laserschmelzen, hergestellt werden. Ein weiterer Vorteil des erfindungsgemäßen Verfahrens ist beispielsweise, dass ein Teil des Kühlkanals im Kolbenoberteil und ein Teil des Kühlkanals auch im Kolbenunterteil liegen kann, wodurch beispielsweise eine mittels Salzkern bzw. generell mittels Gießkern nur schwer erreichbare Nierenform herstellbar ist. Durch den zunächst offenen Teil des Kühlkanals im Kolbenoberteil kann eine Innenfläche dieses Teils des Kühlkanals zusätzlich aufgeraut werden, wodurch eine Oberflächenvergrößerung erfolgt und dadurch ein besserer Wärmeübertrag erreicht werden kann. Das Verschließen des Kühlkanals mittels additivem Verfahren ermöglicht darüber hinaus das Herstellen unterschiedlicher Komponenten, beispielsweise Strahlteiler oder Kühlrippen, welche mit herkömmlichen Herstellungsverfahren wie beispielsweise Gießkernen, nicht oder nur sehr schwer herstellbar war und welche eine Kühlung deutlich verbessern. Darüber hinaus ist es möglich, in dem additiv gefertigten Kolbenunterteil im Schaft- und Nabenbereich an weniger belasteten Stellen Material einzusparen, was beim herkömmlichen Gieß- oder Schmiedeprozess so nicht realisierbar war, und wodurch der Kolben insgesamt leichter ausgebildet werden kann.

Erfindungsgemäß wird in das Kolbenoberteil der Ringträger eingegossen, der die Ringnut bildet. Hierdurch kann die Ringnut aus einem zum Kolbenoberteil anderen Material hergestellt werden.

Bei einer vorteilhaften Weiterbildung der erfindungsgemäßen Lösung wird der sich im Kolbenoberteil befindliche Teil des Kühlkanals durch Schmieden, einem Gießkern oder ein spanabhebendes Verfahren eingebracht. Wird somit beispielsweise das Kolbenoberteil gegossen, so kann zur Ausformung des Kühlkanals ein entsprechender Gießkern, beispielsweise ein Salzkern, eingesetzt werden. Wird das Kolbenoberteil geschmiedet, kann der im Kolbenoberteil liegende Teil des Kühlkanals mittels eines entsprechend ausgeformten Schmiedestempels eingeschmiedet werden. Selbstverständlich ist auch ein spanabhebendes Verfahren denkbar, bei welchem der im Kolbenoberteil liegende Teil des Kühlkanals nach Abschluss des Schmiede- oder Gießprozesses in das Kolbenoberteil eingebracht wird. Insbesondere das spanabhebende Verfahren bietet dabei den gro-βen Vorteil, dass das Kolbenoberteil als Scheibe und lediglich mit eingelegtem Ringträger vorgefertigt werden kann und das Einbringen des Kühlkanalteils erst in einem späteren Verfahrensschritt, beispielsweise mittels Fräsen, Schleifen oder Spanen, erfolgt.

Bei einer vorteilhaften Weiterbildung der erfindungsgemäßen Lösung wird das Kolbenoberteil vor dem additiven Herstellen des Kolbenunterteils, das heißt vor dem additiven Aufbauen des Kolbenunterteils auf dem Kolbenoberteil, zumindest an einer dem Kolbenunterteil zugewandten Seite plan gedreht. Ein derartiges Plandrehen bzw. Planbearbeiten, insbesondere auch Planschleifen, erfolgt dabei vorzugsweise vor dem Einbringen des im Kolbenoberteil liegenden Teils des Kühlkanals, sofern dieser nach dem Schmieden bzw. Gießen eingebracht wird. Durch eine derartige plan bearbeitete Seite kann auf dieser der additive Aufbau des Kolbenunterteils deutlich einfacher erfolgen. Beim additiven Aufbau des Kolbenunterteils wird das Kolbenoberteil auf dem Kopf gedreht, so dass ein additives Aufbauen des Kolbenunterteils von oben erfolgen kann. Durch das Plandrehen kann eine ebene Grund-/Fügefläche erzeugt werden, damit darauf der AM-Prozess (additives Verfahren) ohne Probleme durchgeführt werden kann. Zusätzlich kann man über die Prozessparameter bereits die Oberflächenbeschaffenheit so beeinflussen, dass sie für den AM Prozess vorteilhaft sind, zum Beispiel das Einstellen einer gewissen Rauigkeit.

Bei einer weiteren vorteilhaften Ausführungsform der erfindungsgemäßen Lösung weist ein im Bereich des Kolbenunterteils liegender Teil des Kühlkanals eine im Vergleich zu dem im Kolbenoberteil liegenden Teil des Kühlkanals rauere Oberfläche auf, die mittels additivem Verfahren hergestellt ist. Durch das additive Herstellen des Kolbenunterteils und dem Verschließen des Kühlkanals mittels additivem Verfahren ist es möglich, eine Innenoberfläche des Kühlkanals rauer zu gestalten, wodurch die Oberfläche an sich vergrößert und ein Wärmeübertrag und damit auch eine Kühlung des Kolbens verbessert werden können. Ein Verschlie-ßen des im Kolbenoberteil gelegenen Teils des Kühlkanals durch das additive Aufbauen des Kolbenunterteils kann dabei wahlweise beinhalten, dass der Kühlkanal im Kolbenoberteil lediglich verschlossen oder ein separater Teil des Kühlkanals zusätzlich noch im Kolbenunterteil ausgebildet wird. Mittels additivem Verfahren sind dabei nahezu freiwählbare Querschnittsformen des Kühlkanals denkbar, insbesondere beispielsweise auch ein nierenförmiger Querschnitt, der aufgrund einer Zerbrechlichkeit von Salzkernen mit solchen nicht oder nur schwierig herstellbar wäre.

Zweckmäßig weist ein im Bereich des Kolbenunterteils liegender Teil des Kühlkanals zumindest eine der nachfolgenden Komponenten auf, die mittels additivem Verfahren hergestellt sind: Eine Ölleitstruktur, wie beispielsweise einen Strahlteiler, eine Rampe, eine Kühlrippe oder eine Engstelle. Generell lassen sich mit einem derartigen additiven Verfahren feine und hinsichtlich ihrer Form nahezu beliebig wählbare Strukturen herstellen, die sich geometrisch weder drehen, noch schmieden oder durch Salzkerne herstellen lassen würden. Insbesondere sei an dieser Stelle auch auf die Möglichkeit verwiesen, doppelte oder mehrfache Kühlkanäle sowie angeschlossene Hohlräume an schwach belasteten Stellen im Kolbenunterteil zu schaffen, die zu einer Masseersparnis und damit einer Gewichtsreduzierung beitragen und einen Betrieb einer mit einem derartigen Kolben ausgestatteten Brennkraftmaschine wirtschaftlicher machen. Derartige geschlossene Hohlräume könnten darüber hinaus derart angeordnet werden, dass sie Wärmeleithindernisse darstellen und dadurch eine Wärmeleitung in bestimmte Richtung im Kolben lenken. Hierdurch kann eine besonders gezielte Wärmeabfuhr und damit eine besonders gezielte Kühlung eines derartigen Kolbens erreicht werden.

Erfindungsgemäß wird das Kolbenoberteil aus einer Aluminiumlegierung hergestellt. Es ist somit beispielsweise möglich, das Kolbenoberteil mit vergleichsweise hoher Festigkeit auszubilden, beispielsweise als Aluminiumkolben mit eingebettetem Ringträger. Hierdurch können die mechanisch und thermisch am höchsten belasteten Bereiche mit entsprechender Festigkeit ausgeführt werden.

Erfindungsgemäß wird das Kolbenunterteil mittels Laserschmelzen hergestellt. Das Laserschmelzen gehört zur Gruppe der Strahlschmelzverfahren und ist ein additives Fertigungsverfahren, bei welchem der zu verarbeitende Werkstoff, beispielsweise Metall, insbesondere Aluminium, in Pulverform in einer dünnen Schicht auf dem Kolbenoberteil aufgebracht und mittels Laserstrahlung lokal vollständig umgeschmolzen wird. Nach Erstarren des umgeschmolzenen Werkstoffs bildet dieser eine feste Materialschicht. Anschließend wird das Kolbenoberteil um den Betrag der zuvor aufgebrachten Schichtdicke abgesenkt und erneut der zu verarbeitende Werkstoff in Pulverform, beispielsweise Aluminiumpulver, aufgetragen. Dies erfolgt solange, bis alle Schichten umgeschmolzen und das Kolbenunterteil fertig aufgebaut ist. Anschließend erfolgt ein Reinigen bzw. ein Nachbearbeiten. Der große Vorteil eines derartigen Laserschmelzens liegt in dem kostengünstigen und qualitativ hochwertigen Aufbau des Kolbenunterteils, wobei zugleich eine nahezu freiwählbare Formgebung, selbst die Bildung von Hohlräumen, problemlos möglich ist.

Bei einer weiteren vorteilhaften Ausführungsform der erfindungsgemäßen Lösung wird das Kolbenoberteil mittels Schwerkraftkokillenguss gegossen, wobei der Ringträger zuvor in einer Aluminiumschmelze, beispielsweise in einer Aluminium-Silizium-Schmelze, alfiniert wird. Mittels einem derartigen Alfinieren kann eine besonders gute Verbindung zwischen dem Ringträger und dem Grundwerkstoff des Kolbenoberteils erreicht werden. Dies ist insbesondere dann von großem Vorteil, sofern es sich bei dem Werkstoff für das Kolbenoberteil um einen Eisenwerkstoff handelt.

Bei einer weiteren vorteilhaften Ausführungsform der erfindungsgemäßen Lösung weist das Kolbenunterteil zumindest Teile einer Bolzennabe und/oder eines Kolbenschafts auf, die mittels additivem Verfahren hergestellt werden. Rein theoretisch ist es somit möglich, dass das Kolbenoberteil nicht nur den Kolbenboden, zumindest Teile einer Ringpartie und zumindest Teile eines Kühlkanals aufweist, sondern beispielsweise auch noch Teile eines Kolbenschafts bzw. Teile einer Bolzennabe. Die Aufteilung der Ringpartie, des Kühlkanals, der Bolzennabe und des Kolbenschafts kann dabei nahezu frei gewählt werden, wobei das Kolbenunterteil üblicherweise zumindest Teile des Kolbenschafts und Teile der Bolzennabe aufweist. Das Kolbenunterteil kann aber zusätzlich auch Teil der Ringpartie aufweisen, insbesondere Teile einer Ringpartie unterhalb des Ringträgers. Der große Vorteil liegt somit darin, die Aufteilung einzelner Bereiche zwischen Kolbenoberteil und Kolbenunterteil individuell frei zu wählen und an entsprechende Fertigungsprozesse anzupassen.

Zweckmäßig weist der Kühlkanal eine nicht-rotationssymmetrische Form bezogen auf eine Kolbenhochachse und/oder eine Kolbenquerachse auf. Hierdurch lassen sich individuelle Kühleffekte erzielen, beispielsweise eine verstärkte Kühlung an bestimmten Stellen durch die jeweilige Kühlkanalgeometrie. Auch kann sich der Kühlkanal verzweigen oder es können mehrere Kühlkanäle in den Kolben eingebracht werden, was mit gängigen Herstellungsverfahren, beispielsweise Schmieden oder Gießen so nicht möglich ist.

Bei einer vorteilhaften Weiterbildung der Erfindung, ist vorgesehen, dass der Kolben, bestehend aus Kolbenoberteil und Kolbenunterteil vor dem Fertigbearbeiten einer Wärmebehandlung unterzogen wird. Dieses Anlassen dient dem Spannungsabbau. Dabei verringert sich die Härte und die Zähigkeit steigt.

Die vorliegende Erfindung beruht weiter auf dem allgemeinen Gedanken, einen Kolben anzugeben, der nach dem zuvor beschriebenen Verfahren hergestellt ist. Ein derartiger Kolben bietet den großen Vorteil, dass das hohe mechanische und thermische Belastungen aufnehmende Kolbenoberteil eine hohe Festigkeit aufweist, da es konventionell, beispielsweise mittels konventionellem Schmieden bzw. Gießen, hergestellt wurde, während das Kolbenunterteil, welches geringere thermische und mechanische Belastungen aufzunehmen hat, mittels additivem Verfahren hergestellt werden kann. Das additive Herstellen des Kolbenunterteils bietet darüber hinaus den großen Vorteil, eine Innenoberfläche eines im Kolbenunterteil gelegenen Kühlkanals rauer und damit mit größerer Oberfläche auszubilden und zudem das gesamte Kolbenunterteil dünner auszubilden, wodurch Gewicht eingespart werden kann. Es ist sogar das Vorsehen von Hohlräumen problemlos möglich, ebenso wie das Vorsehen mehrerer Kühlkanäle oder von Kühlkanälen mit komplexer Querschnittsform, beispielsweise Nierenform, die mit gängigen Herstellungsverfahren, beispielsweise Gießkern, nicht oder nur sehr schwer realisierbar wären. Durch das Herstellen von Hohlräumen ist darüber hinaus eine Lenkung des Wärmeabflusses im Kolbenunterteil möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine Schnittdarstellung durch einen nach einem erfindungsgemäßen Verfahren hergestellten Kolben,
- Fig. 2: einen ersten Verfahrensschritt des erfindungsgemäßen Verfahrens zur Herstellung eines Kolbenoberteils,
- Fig. 3: eine Darstellung wie in Fig. 2, jedoch mit zusätzlichem Kühlkanal,
- Fig. 4: ein erfindungsgemäßes additives Verfahren zur Herstellung eines Kolbenunterteils auf dem gegossenen bzw. geschmiedeten Kolbenoberteil.

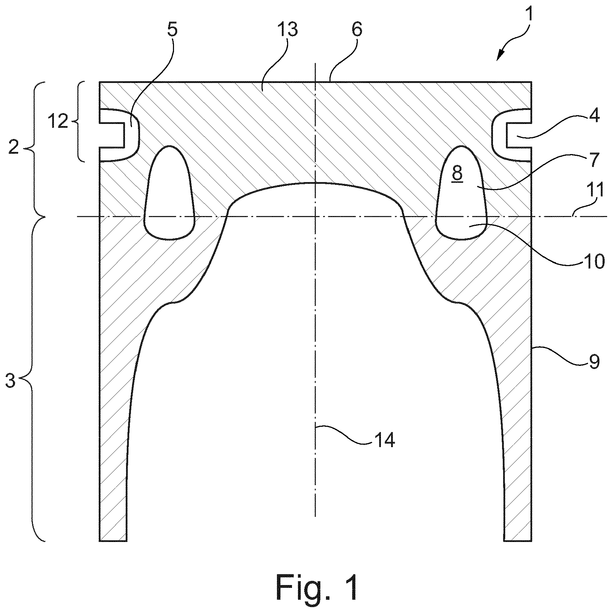

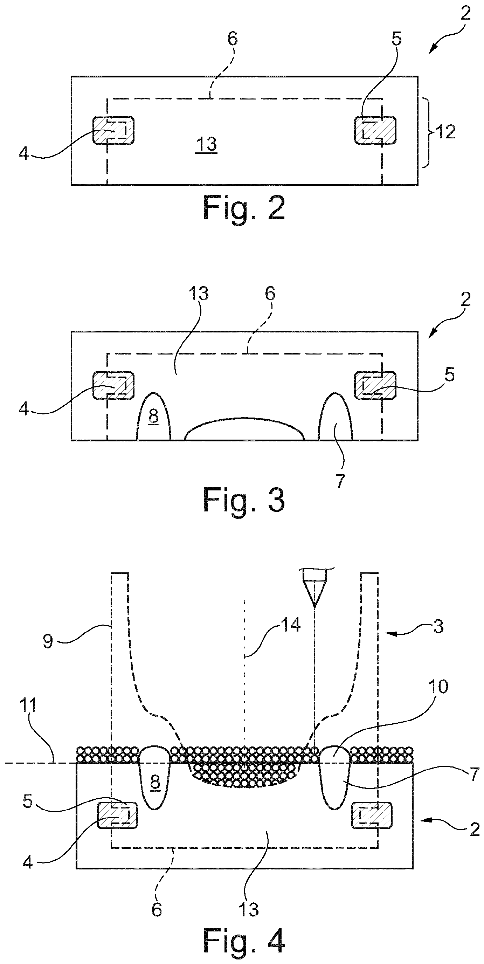

Entsprechend der Figur 1, weist ein nach einem erfindungsgemäßen Verfahren (vergleiche Figuren 2 bis 4) hergestellter erfindungsgemäßer Kolben 1 für einen nicht gezeigten Verbrennungsmotor ein Kolbenoberteil 2 sowie ein Kolbenunterteil 3 auf. In dem Kolbenoberteil 2 ist dabei zumindest eine Ringnut 4 vorgesehen, die beispielsweise mittels eines Ringträgers 5 gebildet bzw. verstärkt wird. Das Kolbenoberteil 2 besitzt zudem einen einem nicht gezeigten Brennraum zugewandten Kolbenboden 6 sowie einen Teil 7 eines Kühlkanals 8. Der Boden 6 ist dabei gemäß der Figur 1 der Einfachheit halber gerade gezeichnet, kann jedoch selbstverständlich alternativ auch eine Brennraummulde aufweisen.

Das Kolbenunterteil 3 besitzt üblicherweise zumindest einen Teil eines Kolbenschaftes 9, der zur Führung des Kolbens 1 in einem Zylinder dient sowie eine nicht näher beschriebene Bolzennabe zur Aufnahme eines Kolbenbolzens, über welchen der Kolben 1 mit einem Pleuel der Brennkraftmaschine verbunden wird. Ebenfalls können im Kolbenunterteil 3 zumindest Teile 10 des Kühlkanals 8 angeordnet sein. Gemäß der Figur 1 liegt dabei der eine Teil 7 des Kühlkanals 8 oberhalb einer Trennebene 11 im Kolbenoberteil 2, während der andere Teil 10 unterhalb der Trennebene 11 im Kolbenunterteil 3 angeordnet ist.

Das Kolbenoberteil 2 ist dabei konventionell hergestellt und zwar beispielsweise mittels eines Schmiedeverfahrens oder eines Gussverfahrens, während das Kolbenunterteil 3 erfindungsgemäß mittels eines additiven Verfahrens hergestellt ist, beispielsweise einem Laserschmelzverfahren. Dies bietet den großen Vorteil, dass der Bereich, hier nämlich das Kolbenoberteil 2, welches im Betrieb hohen mechanischen und thermischen Belastungen ausgesetzt ist, aus einem vergleichsweise festen Werkstoff ausgebildet werden kann, während das thermisch und mechanisch weniger belastete Kolbenunterteil 3 mittels des additiven Verfahrens hergestellt werden kann.

Generell erfolgt das Herstellen des erfindungsgemäßen Kolbens 1 wie folgt:
Zunächst wird das Kolbenoberteil 2 hergestellt, beispielsweise geschmiedet bzw. gegossen, wobei ein Ringträger 5 in das Material 13 des Kolbenoberteils 2 eingeschmiedet bzw. eingegossen werden kann. Das Kolbenoberteil 2 besitzt dabei den Kolbenboden 6 und zumindest Teile einer Ringpartie 12 und zumindest einen Teil 7 des Kühlkanals 8 (vgl. Fig. 2).

Der oberhalb der Trennebene 11, das heißt im Kolbenoberteil 2 gelegene Teil 7 des Kühlkanals 8 kann dabei mittels eines entsprechenden Stempels beim Schmieden oder mittels eines entsprechenden Gießkerns beim Gießen des Kolbenoberteils 2 hergestellt werden. Alternativ ist selbstverständlich auch denkbar, dass der sich im Kolbenoberteil 2 befindliche Teil 7 des Kühlkanals 8 nach dem Herstellen, insbesondere dem Gießen bzw. Schmieden, des Kolbenoberteils 2 mittels eines spanabhebenden Verfahrens oder eines Fräsens bzw. Schleifens in das Material 13 des Kolbenoberteils 2 eingebracht wird. Dies wäre beispielsweise im Verfahrensschritt gemäß der Figur 3 dargestellt, während die Figur 2 das Gie-ßen bzw. Schmieden des Kolbenoberteils 2 ohne den darin vorhandenen Teil 7 des Kühlkanals 8 zeigt.

Anschließend wird das Kolbenoberteil 2 umgedreht, woraufhin das Kolbenunterteil 3 (vergleiche Figur 4) mittels additivem Verfahren hergestellt und dabei gleichzeitig der Kühlkanal 8 verschlossen werden kann. Bei dem additiven Herstellungsverfahren kann selbstverständlich ein direktes und ebenes Verschließen des Kühlkanals 8 entlang der späteren Trennebene 11 erfolgen, oder es wird der Teil 10 des Kühlkanals 8 im Kolbenunterteil 3 vorgesehen.

Der große Vorteil eines derartig hergestellten Kolbens 1 liegt darin, dass der thermisch und mechanisch höchstbelastete Bereich des Kolbens 1, nämlich des Kolbenoberteils 2, aus einem vergleichsweise festen Werkstoff, beispielsweise einer Aluminiumlegierung oder einer Stahllegierung, gegossen bzw. geschmiedet werden kann, während das geringeren thermischen und mechanischen Belastungen ausgesetzte Kolbenunterteil 3 mittels dem additiven Verfahren hergestellt wird. Das additive Verfahren bietet dabei den großen Vorteil, dass mit diesem auch beispielsweise nicht gezeigte Hohlräume hergestellt werden können, insbesondere an Stellen mit geringer mechanischer Belastung, wobei über diese Hohlräume im Kolbenunterteil 3 neben einer Gewichtseinsparung auch eine gezielte Wärmeabfuhr möglich ist, da derartige Hohlräume als Wärmeleithindernis wirken.

Vor dem additiven Herstellen des Kolbenunterteils 3 kann das Kolbenoberteil 2 zumindest an einer dem Kolbenunterteil 3 zugewandten Seite plan bearbeitet, insbesondere plan gedreht werden.

Der im Bereich des Kolbenunterteils 3 liegende Teil 10 des Kühlkanals 8 kann auch eine im Vergleich zu dem im Kolbenoberteil 2 liegenden Teil 7 des Kühlkanals 8 rauere Oberfläche aufweisen, die mittels dem zuvor genannten additiven Verfahren hergestellt ist. Eine derartige rauere Oberfläche kann beispielsweise mittels Gießkernen oder beim Schmieden nicht oder nur sehr aufwändig hergestellt werden. Über eine derartige raue Oberfläche können eine größere Oberfläche und damit ein verbesserter Wärmetausch und eine verbesserte Kühlung des Kolbens 1 erreicht werden.

Darüber hinaus ist es denkbar, dass der im Bereich des Kolbenunterteils 3 liegende Teil 10 des Kühlkanals 8 zumindest eine der nachfolgenden und nicht gezeichneten Komponenten aufweist, welche ebenfalls mittels additiver Verfahren hergestellt sind: eine Ölleitstruktur, wie beispielsweise einen Strahlteiler, eine Rampe, eine Kühlrippe oder eine Engstelle. Über derartige Engstellen lassen sich insbesondere mehrere Kühlkanäle 8, insbesondere voneinander separate Kühlkanäle 8, schaffen, die mittels konventionellen Herstellungsverfahren, beispielsweise Gießen, nicht oder nur schwer möglich herzustellen sind. Dies betrifft auch beispielsweise spezielle Querschnittsformen, wie einen nierenförmigen Querschnitt des Kühlkanals 8, der beim Gießen mittels Gießkernen, beispielsweise Salzkernen, aufgrund der Zerbrechlichkeit der Salzkerne nicht oder nur sehr schwierig möglich ist. Mittels des erfindungsgemäßen additiven Verfahrens lassen sich jedoch die zuvor genannten Komponenten problemlos herstellen, was einen weiteren großen Vorteil zu einer konventionellen Herstellung eines solchen Kolbens bietet.

Das Kolbenoberteil 2 kann beispielsweise gegossen werden, insbesondere mittels Schwerkraft-Kokillenguss, wobei der Ringträger 5 zuvor in einer Aluminiumschmelze, beispielsweise in einer Aluminium-Silizium-Schmelze, alfiniert wird, um einen zuverlässigen Verbund mit dem Material 13 des Kolbenoberteils 2 erreichen zu können.

Die gemäß der Figur 1 gezeichnete Trennebene 11 kann dabei selbstverständlich auch weiter oben oder weiter unten liegen, so dass beispielsweise das Kolbenunterteil 3 auch noch Teile der Ringpartie 12 umfassen kann.

Nach dem Herstellen des Kolbenunterteils 3 und dem Verschließen des im Kolbenoberteil 2 angeordneten Teils 7 des Kühlkanals 8 mittels additivem Verfahren, wird der Kolben 1 fertiggestellt, beispielsweise durch ein Drehen, Schleifen und/oder Läppen, wobei die Ringnut 4 in den Ringträger 5 eingebracht wird.

Gemäß der Figur 2 ist dabei die spätere Kontur des Kolbenoberteils 2 bzw. des Kolbens 1 mittels unterbrochen gezeichneter Linie dargestellt, ebenso wie in Figur 4. Beim Fertigbearbeiten des Kolbens 1 wird somit das Material außerhalb dieser unterbrochen gezeichneter Linie entfernt und der Kolben 1 auf seine unterbrochen gezeichnete Außenkontur zurückgenommen. In diesem Schritt kann selbstverständlich auch ein Bearbeiten, beispielsweise ein Schleifen oder Drehen, des Kolbenunterteils 3 erfolgen.

Durch die erfindungsgemäße Kombination eines konventionellen Herstellungsverfahrens, insbesondere einem Gießen oder Schmieden, des Kolbenoberteils 2 mit einem additiven Aufbau des Kolbenunterteils 3 kann ein erfindungsgemäßer kombinierter Kolben 1 geschaffen werden, der insbesondere im Aufbau des Kolbenunterteils 3 erhebliche Freiheitsgrade aufweist. Von besonderem Vorteil ist dabei darüber hinaus, dass das mittels dem additiven Verfahren hergestellte Kolbenunterteil 3 in Bereichen ausgedünnt werden kann, welche beispielsweise bei einem bisherigen Gießen oder Schmieden aufgrund des Herstellungsverfahrens nicht dünner ausgebildet werden können. Dies sind beispielsweise Bereiche der Anbindung zwischen Kolbennabe und Kolbenboden (heute massiv) oder zwischen Schaft und Ringpartie (siehe Monotherm). Prinzipiell ergeben sich auch deutliche Freiheitsgrade hinsichtlich Gestaltung (Form, Lage, Position) des Kühlkanals.

## Patentansprüche

1. Verfahren zur Herstellung eines Kolbens (1) für einen Verbrennungsmotor aus einem Kolbenoberteil (2) und einem Kolbenunterteil (3),
mit den folgenden Verfahrensschritten:
- Herstellen eines einen Kolbenboden (6), zumindest Teile einer Ringpartie (12) und zumindest einen Teil (7) eines Kühlkanals (8) aufweisenden Kolbenoberteils (2) aus einer Aluminiumlegierung, wobei ein Ringträger (5) zuvor in einer Aluminiumschmelze, insbesondere in einer Aluminium-Silizium-Schmelze, alfiniert wird,
- Herstellen des Kolbenunterteils (3) und Verschließen des im Kolbenoberteils (2) angeordneten Teils (7) des Kühlkanals (8) mittels Laserschmelzen, bei welchem das Aluminium in Pulverform in einer dünnen Schicht auf dem Kolbenoberteil (2) aufgebracht und mittels Laserstrahlung lokal vollständig umgeschmolzen wird,
- Fertigbearbeiten des Kolbens (1) mit Herstellen mindestens einer Ringnut (4) in dem Ringträger (5) zur Aufnahme eines Kolbenrings.

2. Verfahren nach Anspruch 1,
**dadurch gekennzeichnet,**
- **dass** in das Kolbenoberteil (2) ein Ringträger (5) eingeschmiedet oder eingegossen wird und die Ringnut (4) bildet, und/oder
- **dass** der sich im Kolbenoberteil (2) befindliche Teil (7) des Kühlkanals (8) durch Schmieden, einen Gießkern oder ein spanabhebendes Verfahren eingebracht wird.

3. Verfahren nach Anspruch 1 oder 2,
**dadurch gekennzeichnet,**
**dass** das Kolbenoberteil (2) vor dem Laserschmelzen des Kolbenunterteils (3) zumindest an einer dem Kolbenunterteil (3) zugewandten Seite plan bearbeitet, insbesondere plan gedreht, wird.

4. Verfahren nach einem der vorhergehenden Ansprüche
**dadurch gekennzeichnet,**
**dass** ein im Bereich des Kolbenunterteils (3) liegender Teil (10) des Kühlkanals (8) eine im Vergleich zu dem im Kolbenoberteil (2) liegenden Teil (7) des Kühlkanals (8) rauere Oberfläche aufweist, die mittels additivem Verfahren hergestellt ist.

5. Verfahren nach einem der vorhergehenden Ansprüche
**dadurch gekennzeichnet,**
- **dass** der Kühlkanal (8) eine nicht-rotationssymmetrische Form bezogen auf eine Kolbenhochachse (14) und/oder eine Kolbenquerachse aufweist,
und/oder
- **dass** sich der Kühlkanal (8) verzweigt oder mehrere Kühlkanäle (8) in den Kolben (1) eingebracht werden.

6. Verfahren nach einem der vorhergehenden Ansprüche,
**dadurch gekennzeichnet,**
**dass** ein im Bereich des Kolbenunterteils (3) liegender Teil (10) des Kühlkanals (8) zumindest eine der nachfolgenden Komponenten aufweist, die mittels additivem Verfahren hergestellt sind; eine Ölleitstruktur, wie beispielsweise einen Strahlteiler, eine Rampe, eine Kühlrippe oder eine Engstelle.

7. Verfahren nach einem der vorhergehenden Ansprüche,
**dadurch gekennzeichnet,**
**dass** der Kolben (1), bestehend aus Kolbenoberteil (2) und Kolbenunterteil (3) vor dem Fertigbearbeiten einer Wärmebehandlung unterzogen wird.

8. Verfahren nach einem der vorhergehenden Ansprüche,
**dadurch gekennzeichnet,**
**dass** das Kolbenoberteil (2) gegossen wird, insbesondere mittels Schwerkraft-Kokillenguss, wobei der Ringträger (5) zuvor in einer Aluminiumschmelze, insbesondere in einer Aluminium-Silizium-Schmelze, alfiniert wird.

9. Verfahren nach einem der vorhergehenden Ansprüche,
**dadurch gekennzeichnet,**
- **dass** das Kolbenunterteil (3) zumindest Teile einer Bolzennabe und/oder eines Kolbenschafts (9) aufweist, die mittels additivem Verfahren hergestellt werden.
- **dass** das Kolbenunterteil (3) zumindest Teile der Ringpartie (12) aufweist, die mittels Laserschmelzen hergestellt wird.

10. Kolben (1) für einen Verbrennungsmotor, hergestellt nach einem Verfahren gemäß einem der vorhergehenden Ansprüche.

## Claims

1. Method for producing a piston (1) for an internal combustion engine, made of a piston upper part (2) and a piston lower part (3), having the following method steps:
- production of a piston upper part (2), having a piston base (6), at least parts of a ring portion (12) and at least one part (7) of a cooling duct (8), made of an aluminium alloy, wherein a ring carrier (5) is previously alfinised in an aluminium melt, in particular in an aluminium-silicon melt,
- production of a piston lower part (3) and closure of the part (7) of the cooling duct (8) arranged in the piston upper part (2) by means of laser melting, in which the aluminium is applied in a thin layer to the piston upper part (2) in powder form and is completely remelted locally by means of laser radiation,
- finishing of the piston (1) with the production of at least one annular groove (4) in the ring carrier (5) for receiving a piston ring.

2. Method according to claim 1,
**characterised in that**
- a ring carrier (5) is forged or poured into the piston upper part (2) and forms the annular groove (4), and/or
- that the part (7) of the cooling duct (8) located in the piston upper part (2) is introduced by forging, a casting core or a machining process.

3. Method according to claim 1 or 2,
**characterised in that**
the piston upper part (2) is machined flat, in particular is turned flat, prior to the laser melting of the piston lower part (3) at least at a side facing towards the piston lower part (3).

4. Method according to any of the preceding claims
**characterised in that**
a part (10) of the cooling duct (8) situated in the region of the piston lower part (3) has a rougher surface in comparison to the part (7) of the cooling duct (8) situated in the piston upper part (2), which is produced by means of an additive process.

5. Method according to any of the preceding claims
**characterised in that**
- the cooling duct (8) has a non-rotationally-symmetrical shape related to a piston vertical axis (14) and/or a piston transverse axis, and/or
- the cooling duct (8) branches or several cooling ducts (8) are introduced into the piston (1).

6. Method according to any of the preceding claims
**characterised in that**
a part (10) of the cooling duct (8) situated in the region of the piston lower part (3) has at least one of the following components, which are produced by means of an additive process; an oil conducting structure, such as for example a flow divider, a ramp, a cooling rib or a constriction.

7. Method according to any of the preceding claims
**characterised in that**
the piston (1), consisting of piston upper part (2) and piston lower part (3) are subjected to a heat treatment before the finishing.

8. Method according to any of the preceding claims
**characterised in that**
the piston upper part (2) is poured, in particular by means of gravity die casting, wherein the ring carrier (5) is previously alfinised in an aluminium melt, in particular in an aluminium-silicon melt.

9. Method according to any of the preceding claims
**characterised in that**
- the piston lower part (3) has at least parts of a pin boss and/or a piston shaft (9) which are produced by means of an additive process,
- the piston lower part (3) has at least parts of the ring part (12) which is produced by means of laser melting.

10. Piston (1) for an internal combustion engine, produced according to a method according to any of the preceding claims.

## Revendications

1. Procédé de fabrication d'un piston (1) pour un moteur à combustion interne à partir d'une partie supérieure de piston (2) et d'une partie inférieure de piston (3), avec les étapes de procédé suivantes :
- fabrication d'une partie supérieure de piston (2) présentant un fond de piston (6), au moins des parties d'une partie annulaire (12) et au moins une partie (7) d'un canal de refroidissement (8) en un alliage d'aluminium, dans lequel un support annulaire (5) est soumis au préalable à un procédé Al-Fin dans une fusion d'aluminium, en particulier une fusion d'aluminium et de silicium,
- fabrication de la partie inférieure de piston (3) et fermeture de la partie (7) agencée dans la partie supérieure de piston (2) du canal de refroidissement (8) au moyen d'une fusion au laser, lors de laquelle l'aluminium est appliqué sous la forme d'une poudre en une couche mince sur la partie supérieure de piston (2) et est refondu localement entièrement au moyen d'un rayonnement laser,
- finition du piston (1) avec la fabrication d'au moins une rainure annulaire (4) dans le support annulaire (5) pour la réception d'un anneau de piston.

2. Procédé selon la revendication 1,
**caractérisé en ce que**
- un support annulaire (5) est forgé ou coulé dans la partie supérieure de piston (2) et forme la rainure annulaire (4), et/ou
- la partie (7) se trouvant dans la partie supérieure de piston (2) du canal de refroidissement (8) est introduite par forgeage, un noyau de coulée ou un procédé d'enlèvement de copeaux.

3. Procédé selon la revendication 1 ou 2,
**caractérisé en ce que**
la partie supérieure de piston (2) est usinée de manière plane, en particulier tournée de manière plane, avant la fusion au laser de la partie inférieure de piston (3) au moins au niveau d'un côté tourné vers la partie inférieure de piston (3).

4. Procédé selon l'une quelconque des revendications précédentes,
**caractérisé en ce que**
une partie (10) se trouvant dans la zone de la partie inférieure de piston (3) du canal de refroidissement (8) présente une surface plus rugueuse par rapport à la partie (7) se trouvant dans la partie supérieure de piston (2) du canal de refroidissement (8), surface qui est fabriquée au moyen d'un procédé additif.

5. Procédé selon l'une quelconque des revendications précédentes,
**caractérisé en ce que**
- le canal de refroidissement (8) présente une forme non symétrique en rotation par rapport à un axe vertical de piston (14) et/ou un axe transversal de piston, et/ou
- le canal de refroidissement (8) se ramifie ou plusieurs canaux de refroidissement (8) sont introduits dans le piston (1).

6. Procédé selon l'une quelconque des revendications précédentes,
**caractérisé en ce que**
une partie (10) se trouvant dans la zone de la partie inférieure de piston (3) du canal de refroidissement (8) présente au moins un des composants suivants qui sont fabriqués au moyen d'un procédé additif; une structure conductrice d'huile, par exemple un séparateur de faisceau, une rampe, une nervure de refroidissement ou un rétrécissement.

7. Procédé selon l'une quelconque des revendications précédentes,
**caractérisé en ce que**
le piston (1) consistant en la partie supérieure de piston (2) et la partie inférieure de piston (3) est soumis à un traitement thermique avant la finition.

8. Procédé selon l'une quelconque des revendications précédentes,
**caractérisé en ce que**
la partie supérieure de piston (2) est coulée, en particulier au moyen d'une coulée en coquille par gravité, dans lequel le support annulaire (5) est soumis au préalable à un procédé Al-Fin dans une fusion d'aluminium, en particulier dans une fusion d'aluminium et de silicium.

9. Procédé selon l'une quelconque des revendications précédentes,
**caractérisé en ce que**
- la partie inférieure de piston (3) présente au moins des parties d'un bossage d'axe et/ou d'une jupe de piston (9) qui sont fabriquées au moyen d'un procédé additif.
la partie inférieure de piston (3) présente au moins des parties de la partie annulaire (12) qui est fabriquée au moyen d'une fusion au laser.

10. Piston (1) pour un moteur à combustion interne fabriqué selon un procédé selon l'une quelconque des revendications précédentes.
